# NEUE EUROPÄISCHE PATENTSCHRIFT

(11) **EP 1 700 777 B2**
(45) Veröffentlichungstag und Bekanntmachung des Hinweises auf die Entscheidung über den Einspruch: **23.09.2015**
(45) Hinweis auf die Patenterteilung: 25.05.2011
(21) Anmeldenummer: 06008970.3
(22) Anmeldetag: 16.03.2005
(51) Int. Cl.: B62D 33/06

(54) **Aufhängung für eine Fahrerkabine eines Nutzfahrzeuges und Verfahren zu deren Steuerung**
Suspension for a driver cab of a utility vehicle and command process thereof
Suspension pour une cabine de véhicule utilitaire et procédé de commande de cette dernière

(30) Priorität: 06.04.2004 DE 102004016910
(43) Veröffentlichungstag der Anmeldung: 13.09.2006
(62) Teilanmeldung aus: 05005688.6
(73) Patentinhaber: MAN Truck & Bus AG, 80995 München (DE)
(72) Erfinder: Gerritzen, Ralph, Dipl.-Ing. (FH), 82110 Germering (DE); Mendler, Hardy, Dipl.-Ing., 85221 Dachau (DE); Nickels, Thomas, Dipl.-Ing., 81541 München (DE)

(56) Entgegenhaltungen:
- EP-A- 0 994 009
- WO-A1-99/24309
- DE-A1- 10 232 909
- WABCO Fahrzeugbremsen, WABCO Standard, ABS/ASR "D" - "Cab" - Version Anti-Blocker-System für Nutzfahrzeuge, 1999
- WABCO SAVETY DRIVES US, Wabco Vehicle Control Systems, "Wabco Truck ABS/EBS Truck ABS/EBS Elektronisch geregelte Bremssysteme, 2002
- WABCO Service Direct, WABCO Vehicle Control System, "ESC-Elektronische Stabilitätsregelung im Nutzfahrzeug" WABCO, 2000

## Beschreibung

Die vorliegende Erfindung betrifft eine Aufhängung für eine Fahrerkabine eines Nutzahrzeuges sowie ein Verfahren zur Steuerung einer derartigen Aufhängung.

Moderne Nutzfahrzeuge in sog. Frontlenkerbauweise weisen eine über Federn und/oder Dämpfer mit einem Fahrzeugrahmen verbundene Fahrerkabine auf, die oberhalb einer Vorderachse eines Zugfahrzeuges bzw. Nutzfahrzeuges angeordnet ist. Diese gefederte und/oder gedämpfte Aufhängung ist aufgrund von teilweise erheblichen vertikalen Beschleunigungen, die auf die Fahrerkabine einwirken, nahezu unverzichtbar. Sobald sich das Nutzfahrzeug im Stillstand befindet, kann sich diese Federung jedoch als Nachteil erweisen, da die Fahrerkabine bei Windeinflüssen, beispielsweise durch nahe vorbei fahrende Fahrzeuge ins Schwanken geraten kann. Bei einem im Fahrerhaus schlafenden Fahrer oder Passagier kann dies zu mehr oder weniger starken Beeinträchtigungen seiner Ruhephasen führen. Weiterhin kann bei einem an einer Steigung bzw. auf einer zur Seite geneigten Fahrbahn abgestellten Fahrzeug die hieraus- resultierende Neigung der Fahrerkabine zu Komforteinbußen für den ruhenden Fahrer führen.

Die DE 41 36 572 A1 beschreibt ein Fahrzeug mit einer Nivelliereinrichtung, mit deren Hilfe das Fahrzeug im Stillstand horizontal ausgerichtet werden kann. Die horizontale Ausrichtung des Fahrzeugrahmens und damit des gesamten Fahrzeuges erfolgt über verstellbare hydraulische Federbeine, welche den Achsaufhängungen des Fahrzeugs zugeordnet sind.

Die JP 071 49 256 A beschreibt ein Luftfederungssystem für ein Fahrzeug, bei dem mittels eines mechanisch wirkenden Neigungssensors eine horizontale Ausrichtung einer Fahrerkabine eingestellt werden kann.

Die EP 0994009 A offenbart eine Aufhängung für eine Fahrerkabine gemäß dem Oberbegriff vom Anspruch 1.

Ein erstes Ziel der vorliegenden Erfindung besteht darin, ein einfach aufgebautes und einEn erstes Ziel der vorliegenden Erfindung besteht darin, ein einfach aufgebautes und einfach zu bedienendes Steuerungssystem bzw. -verfahren für eine Aufhängung einer Fahrerkabine zur Verfügung zu stellen, die eine weitgehend horizontale Ausrichtung der Fahrerkabine in nahezu jeder Fahrzeugposition bei dessen Stillstand ermöglicht.

Dieses erste Ziel der Erfindung wird mit dem Gegenstand des unabhängigen Anspruchs 1 bzw. mit einem Verfahren gemäß Anspruch 5 erreicht. Bei der erfindungsgemäßen Aufhängung für eine Fahrerkabine eines Nutzfahrzeuges mit den Merkmalen des Anspruchs 1 ist vorgesehen, dass eine annähernd horizontale Lage der Fahrerkabine im Stillstand des Nutzfahrzeuges durch eine Einstellung des jeweiligen Hubs von Tragelementen und/oder von Aufhängungselemente eines Fahrwerks des Nutzfahrzeuges realisierbar ist. Als Tragelemente können insbesondere mit hydraulischem und/oder pneumatischem Druck beaufschlagbare Tragbälge bzw. Federbälge zum Einsatz kommen, die zwischen der Fahrerkabine und dem Fahrgestellrahmen angeordnet sind.

Unter einem Tragelement wird im vorliegenden Zusammenhang ein Bauteil verstanden, das eine Luftfeder, bspw. einen Federbalg, sowie ein Dämpferelement, bspw. einen hydraulisch wirkenden Stoßdämpfer, umfasst. Ggf. kann das Tragelement darüber hinaus einen Wegsensor zur Erfassung einer aktuellen Auslenkung des Tragelements aufweisen.

Bei einer pneumatisch wirkenden Aufhängung mit Federbälgen können beispielsweise durch manuelle Steuerung seitens des Fahrers einzelne dieser Federbälge mit einem erhöhten Druck beaufschlagt werden, während aus anderen Federbälgen die darin gespeicherte Druckluft abgelassen wird. Hierdurch kann auf einfache Weise eine horizontale Ausrichtung der Fahrerkabine hergestellt werden. Gleiches funktioniert auch mit einem hydraulisch wirkenden System, bei dem die Fahrerkabine über hydraulische wirkende Feder- und/oder Dämpferelemente mit dem Fahrzeugrahmen verbunden ist.

Mittels der erfindungsgemäßen Aufhängung kann der Fahrer das Fahrerhaus während des Stillstandes des Fahrzeugs in eine horizontale Lage bringen. Das Fahrerhaus kann bei diesem sog. Schlafmodus unabhängig von der Bodenneigung waagrecht eingestellt werden. Auf diese Weise kann gewährleistet werden, dass der Fahrer bei den gesetzlich vorgeschriebenen Ruhepausen ein Höchstmaß an Komfort genießen kann. Bei einer ersten Variante der Aufhängungssteuerung kann der Fahrer einzelne Tragelemente manuell in ihrem Hub einstellen, bis die Kabine horizontal ausgerichtet ist. Dies kann insbesondere manuell erfolgen. Ein Neigungs- oder Lagesensor ist hierbei nicht zwingend notwendig, da der Fahrer die Fahrzeugneigung selbst beurteilen und die Ausrichtung der Fahrerkabine entsprechend seiner eigenen Wahrnehmung vornehmen kann.

Neben einer manuellen Steuerung des Hubs der Tragelemente und/oder der Aufhängungselemente des Fahrwerks kann auch eine automatische Steuerung vorgesehen sein, die beispielsweise die Signale eines Lage- bzw. Neigungssensors auswertet und daraus eine Druckbeaufschlagung der einzelnen Trag- oder Aufhängungselemente herleitet.

Eine einfache Ausführungsform der Erfindung kann vorsehen, dass eine Ausrichtung der Fahrerkabine um eine Längsachse des Nutzfahrzeuges ausschließlich über eine unterschiedliche Druckbeaufschlagung der Tragelemente erfolgt, während eine Ausrichtung um eine Querachse des Fahrzeugs mittels einer Absenkung oder Anhebung des Chassis gegen die Hinterachse des Fahrzeugs erfolgt. Die Ausrichtung um die Längsachse erfolgt hierbei mittels linker bzw. rechter Tragelemente, während die Ausrichtung um die Querachse mittels einer Höhenverstellung der Aufhängungselemente der Fahrzeughinterachse erfolgt. Diese Ausrichtung um die Fahrzeugquerachse kann in vorteilhafter Weise mittels eines bereits vorhandenen ECAS-Systems (ECAS, Electronically Controlled Air Suspension) erfolgen, bei dem die Fahrzeughinterachse mittels pneumatisch wirkender Tragbälge gegen den Rahmen abgestützt ist.

Bei einer alternativen Variante der erfindungsgemäßen Aufhängung wird das Fahrerhaus über alle drei oder vier vorhandenen Tragelemente bzw. Tragbälge in eine horizontale Lage gebracht. Ein ECAS-System zur Höhenregulierung der Fahrzeughinterachse ist hierbei nicht notwendig. Vorteilhaft kann diese Variante insbesondere bei Fahrzeugen eingesetzt werden, die am Chassis mit herkömmlichen Stahlfedern (Schrauben- und/oder Blattfederelementen) ausgestattet sind. Allerdings muss die Ansteuerung der Tragelemente zur richtigen Ausrichtung des Fahrerhauses in geeigneter Weise miteinander gekoppelt sein. Auch diese Variante des Systems kann sowohl manuell als auch automatisch gesteuert werden.

Weiterhin kann es von Vorteil sein, wenn die Tragelemente nach einer erfolgten Lagejustierung in ihrer Dämpfungscharakteristik dahingehend einstellbar sind, dass eine Bewegung der Fahrerkabine weitgehend oder vollständig unterdrückbar ist. Dies kann insbesondere durch eine geeignete Dämpferhartstellung erreicht werden, bei der eine maximale Dämpferverhärtung angestrebt wird. Hierdurch kann beispielsweise eine durch Wind hervorgerufene Schwankbewegung der Fahrerkabine weitgehend unterdrückt werden. Gleichermaßen können hierdurch Schwankbewegungen unterdrückt werden, die durch Windkräfte vorbei fahrender Fahrzeuge wie LKWs o. dgl. verursacht werden. Zusätzlich können Bewegungen der Fahrerkabine, ausgelöst durch Bewegungen oder Gewichtsverlagerungen von Personen in der Kabine, unterdrückt werden. Es kann ggf. auch vorgesehen sein, dass die Fahrerkabine mechanisch verriegelbar ist. Zusätzlich kann das Fahrwerk gegen einen mechanischen Anschlag (sog. Pufferanschlag bzw. Achsanschlag) gefahren werden.

Neben einer Höhenregulierung des Chassis an der Hinterachse kann optional auch eine zusätzliche Höhenregulierung an der Vorderachse vorgesehen sein, vorzugsweise mittels eines ebenfalls bereits vorhandenen ECAS-Systems an der Vorderachse.

Eine weitere Ausgestaltung der Erfindung sieht vor, dass eine automatische Ausregelung von Schwankbewegungen mittels einer variablen Ansteuerung der Tragelemente der Fahrerkabine erfolgen kann. Das Fahrzeugchassis kann zur Erreichung einer Wankstabilisierung mittels des ECAS-Systems auf den Achsanschlag (Vorder- und/oder Hinterachse) abgesenkt werden. Der Regelvorgang der Wankstabilisierung kann dadurch erfolgen, dass die Tragbälge be- oder entlüftet und im eingestellten Zustand gehalten werden, so dass die Fahrerkabine horizontal ausgerichtet ist. Anschließend werden die Dämpfungselemente auf ihre härteste Stufe eingestellt bzw. blockiert. Hierdurch können Windeinflüsse oder auch Schaukeln aufgrund von Lastverteilungen in der Kabine vermindert bzw. vermieden werden. Als einstellbare Dämpfer können bspw. sog. CDC-Dämpfer (CDC, Continuous Damping Control) eingesetzt werden, die in ihrer Dämpfungscharakteristik in weiten Grenzen varüerbar sind.

Die Sensierung der Lage und/oder der Bewegungen der Fahrerkabine kann wahlweise mittels eines, der Fahrerkabine zugeordneten bzw. dort angeordneten Lagesensors und/oder mittels Wegsensoren erfolgen, die den jeweiligen Tragelementen zugeordnet bzw. dort integriert sind. Als solche Wegsensoren kommen insbesondere induktive Sensoren oder Ultraschallsensoren in Frage, die innerhalb der Luftbälge angeordnet sein können. Wahlweise oder zusätzlich kann ein induktiv arbeitender Wegsensor an einer geeigneten Stelle am Chassis angeordnet sein.

Die weiteren bevorzugten Ausgestaltungen des erfindungsgemäßen Verfahrens verwenden die bereits erwähnten unterschiedlichen Merkmale, so dass sie hier nicht nochmals erwähnt werden müssen.

Ein weiteres Ziel der Erfindung besteht darin, eine Aufhängungssteuerung für eine Fahrerkabine eines Nutzfahrzeuges zur Verfügung zu stellen, mit der auf einfache Weise Nick- oder Rollbewegungen aufgrund unterschiedlicher Fahrzustände des Nutzfahrzeuges gedämpft bzw. unterdrückt werden können.

Dieses weitere Ziel der Erfindung wird mit den Gegenständen der unabhängigen Ansprüche 1 und 2 erreicht, wonach vorgesehen ist, dass die Fahrzustandsänderungen des Nutzfahrzeugs aus den Ausgangssignalen eines Fahrgeschwindigkeitssensors sowie aus den Ausgangssignalen eines Lenkwinkelsensors ableitbar sind.

Bei einer vorgesehenen Auswertung der Signale eines Beschleunigungssensors kann ein Ausgangsignal beispielsweise aus den Bussignalen einer Blockierverhinderungseinrichtung (ABS), einer Fahrdynamikregelung (ESP) oder aus den Ausgangssignalen eines separaten Beschleunigungssensors bzw. mehrerer separater Beschleunigungssensoren hergeleitet werden. Bei einer alternativen Ausgestaltung, bei der lediglich die Signale eines Tachogenerators ausgewertet werden und daraus durch Differenzieren nach der Zeit (dv/dt) eine Fahrzeugbeschleunigung hergeleitet wird, können unterschiedliche Signale in einem Kennfeld abgelegt sein, woraus entsprechende Bewegungen der Fahrerkabine herleitbar sind. Mittels der erfindungsgemäßen Aufhängung bzw. des erfindungsgemäßen Verfahrens zur Aufhängungssteuerung können unerwünschte Nickbewegungen der Fahrerkabine aufgrund eines Anfahr- oder Bremsvorganges und/oder Rollbewegungen aufgrund einer Kurvenfahrt ausgeglichen werden. Darüber hinaus ist es möglich, nahezu beliebige Fahrzustandsänderungen zu sensieren und in Abhängigkeit davon eine Stabilisierung der Fahrerkabinenaufhängung zu erreichen, so dass diese möglichst geringen Schaukel, Nick- und Vertikalbewegungen ausgesetzt ist.

Die Fahrzustandsänderungen können mittels eines Beschleunigungssensor, mehrerer Beschleunigungssensoren (als Ersatz für einen Gierratensensor bzw. zur Nachbildung dessen Ausgangssignale) und/oder eines Gierratensensors erfasst werden. Diese Sensoren können als separate Systembestandteile im Fahrzeug vorgesehen sein. Die notwendigen Signale zur Ansteuerung der Fahrerkabinenaufhängung können jedoch in vorteilhafter Weise auch aus den Sensorsignalen einer Fahrdynamikregelung (bspw. sog. ESP) gewonnen werden, die üblicherweise als Bussignale eines CAN-Bus-Systems zur Verfügung stehen.

Eine besonders vorteilhafte Variante der Erfindung sieht vor, dass Fahrzustandsänderungen, die typischerweise zu unerwünschten Nick- oder Rollbewegungen der Fahrerkabine führen, aus den Signalen eines Sensors hergeleitet werden, der ein von der Fahrgeschwindigkeit bzw. ein von einem Lenkwinkel abhängiges Ausgangssignal liefert. Ein solcher Geschwindigkeitssensor kann bspw. ein Drehratensensor einer Blockierverhinderungseinrichtung eines Bremssystems o. dgl. sein, der aus den Raddrehzahlen Eingangsgrößen für ein sog. Anti-Blockier-System gewinnt. Der Lenkwinkelsensor kann bspw. Bestandteil einer bereits vorhandenen Fahrdynamikregelung sein. Auf diese Weise lässt sich eine bereits vorhandene Fahrzeugausstattung für die Zwecke der vorliegenden Erfindung vorteilhaft nutzen. Mittels einer Zuordnungsvorschrift, bspw. in Form eines Kennfeldes, lassen sich die unterschiedlichen Sensorsignale jeweils unterschiedlichen Aufbaubewegungen der Fahrerkabine zuordnen. Diese fahrzeug- und aufbauspezifischen Zusammenhänge lassen sich mittels geeigneter Berechnungen, Abschätzungen und/oder mittels Versuchsreihen ermitteln, so dass sich für unterschiedliche Fahrzeuge und Aufbauten jeweils unterschiedliche Kennfelder ermitteln lassen. Die Nick- und Wankstabilisierung der Fahrzeugkabine lässt sich auf diese Weise mittels eines relativ einfachen und reaktionsschnellen Steuersystems realisieren, das keine aufwändige Rechenarbeit eines Regelsystems benötigt.

Die Erfindung umfasst jedoch gleichermaßen Systeme, bei denen eine geregelte Ansteuerung der Tragelemente der Fahrerkabine erfolgt. Hierzu können die Tragelemente ggf. mit Wegsensoren versehen sein, welche die aktuelle Auslenkung jedes Tragelements sensieren und ein entsprechendes Sensorsignal liefern.

Die Erfindung wird nachfolgend anhand eines bevorzugten Ausführungsbeispiels unter Bezugnahme auf die beiliegenden Zeichnungen näher erläutert. Dabei zeigt:
- Figur 1: eine schematische Darstellung eines Nutzfahrzeuges in Frontlenkerbauweise, das eine über einer Vorderachse angeordnete Fahrerkabine aufweist,
- Figur 2: eine schematische Perspektivdarstellung eines Teils eines Rahmengestells des Nutzfahrzeuges inklusive der dazugehörigen Fahrerhauslagerung, jedoch ohne Fahrerhausbodenblech,
- Figur 3: ein schematisches Blockschaltbild einer ersten Variante einer erfindungsgemäßen Aufhängungssteuerung für die Fahrerkabine,
- Figur 4: ein schematisches Blockschaltbild einer zweiten Variante der Aufhängungssteue- rung und
- Figur 5: ein schematisches Blockschaltbild einer dritten Variante der Aufhängungssteuerung und
- Figur 6: ein schematisches Blockschaltbild einer vierten Variante der Aufhängungssteue- rung.

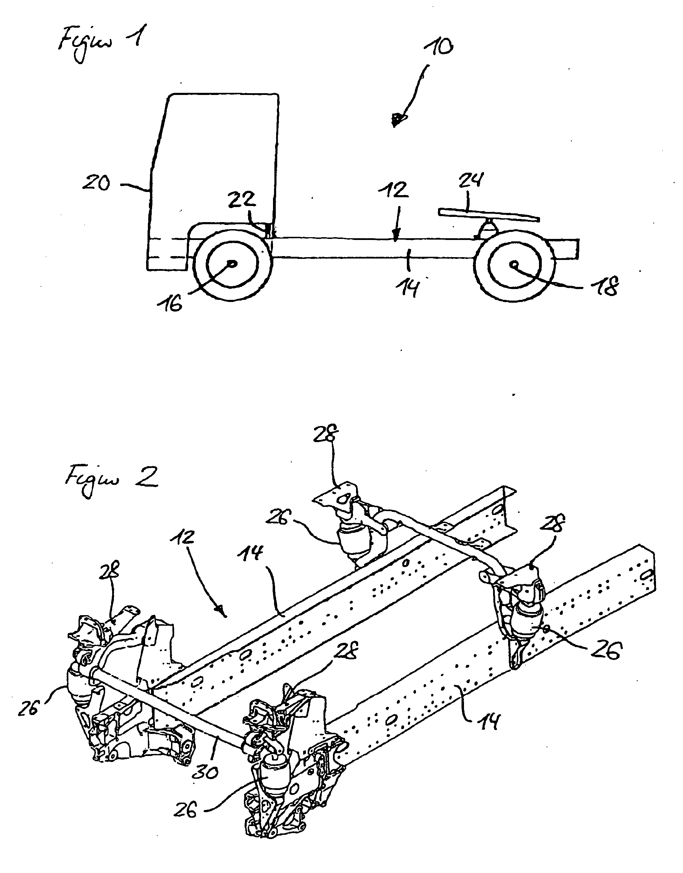

Die schematische Darstellung der Figur 1 zeigt eine Sattelzugmaschine in sog. Frontlenkerbauweise, die im Folgenden allgemein als Nutzfahrzeug 10 bezeichnet wird. Die Erfindung beschränkt sich jedoch keineswegs auf sog. Frontlenkerfahrzeuge, sondern lässt sich in gleicher Weise an sog. Haubenfahrzeugen realisieren, bei denen die Fahrerkabine hinter einem Antriebsmotor angeordnet ist. Das Nutzfahrzeug 10 kann selbstverständlich auch einen anderen Aufbau aufweisen als den gezeigten. So kann es bspw. Tandemachsen vorne und/oder hinten oder hintere Drillingsachsen aufweisen. Die erfindungsgemäße Aufhängung kann in vorteilhafter Weise bei allen denkbaren Nutzfahrzeug- und Sonderfahrzeugvarianten eingesetzt werden.

Das Nutzfahrzeug 10 weist einen Fahrgestellrahmen 12 (sog. Chassis) auf, der üblicherweise mindestens zwei miteinander verstrebte Längsträger 14 umfasst. Am Fahrgestellrahmen 12 sind jeweils Aufhängungselemente (nicht dargestellt) für eine Vorderachse 16 sowie für eine Hinterachse 18 verankert. Eine Fahrerkabine 20 ist über mehrere Tragelemente 22 gefedert und/oder gedämpft mit dem Fahrgestellrahmen 12 verbunden. Wenn im vorliegenden Zusammenhang von Tragelementen 22 die Rede ist, so ist damit grundsätzlich ein Luftfeder-Dämpfungsmodul gemeint, bei dem Luftfedern und hydraulische bzw. pneumatische Dämpfungselemente in kombinierter Bauweise zusammengefasst sind. Zusätzlich können die Tragelemente noch mit geeigneten integrierten Wegsensoren versehen sein, die bspw. eine Auslenkung der Tragelemente 22 mittels Ultraschallsignalauswertung erfassen und daraus ein Sensorsignal bilden können. Die Wegsensoren können bspw. auch eine induktive Wegerfassung vorsehen.

Typisch für die Frontlenkerbauweise ist, dass die Fahrerkabine 20 über der Vorderachse 16 angeordnet ist. Das in Figur 1 dargestellte Nutzfahrzeug 10 ist als Zugfahrzeug ausgestaltet. Hierbei ist im Bereich der Hinterachse 18 ein Kupplungselement 24 für einen Aufliegeanhänger (nicht dargestellt) angeordnet.

Bei einem Stillstand des Nutzfahrzeuges 10 kann die Fahrerkabine 20 als Ruheraum für einen Fahrer genutzt werden, wenn dieser beispielsweise Ruhe- oder Übernachtungspausen einlegt. Hierbei kann es vorkommen, dass das Nutzfahrzeug 10 auf geneigtem oder unebenem Untergrund steht, so dass die Fahrerkabine 20 nicht horizontal ausgerichtet ist. Dies kann zu Komforteinbußen für den ruhenden Fahrer führen.

Ein weiteres Problem hinsichtlich eines optimalen Ruhekomforts kann dadurch entstehen, dass die gefedert und/oder gedämpft abgestützte Fahrerkabine 20 bei Windböen und/oder bei Windeinflüssen durch vorbeifahrende Fahrzeuge o. dgl. ins Schwanken geraten kann. Derartige Schwankungen können auch durch Bewegungen der Kabinenpassagiere ausgelöst werden. Aus diesem Grund sieht die vorliegende Erfindung vor, dass die Fahrerkabine 20 im Stillstand des Fahrzeugs 10 horizontal ausgerichtet und/oder stärker gedämpft (Dämpfer auf härteste Stufe gestellt) werden kann, beispielsweise durch eine manuelle Ansteuerung der Tragelemente 22, die im gezeigten Ausführungsbeispiel jeweils pneumatisch wirkende Federbälge 26 aufweisen, wie dies anhand der schematischen Darstellung der Figur 2 verdeutlicht ist.

Die schematische Darstellung der Figur 2 zeigt die Anordnung der Tragelemente 22, die hier als vier Federbälge bzw. Tragbälge 26 an den beiden Längsträgern 14 des Fahrgestellrahmens 12 dargestellt sind, an deren oberem Ende jeweils ein Verankerungsteil 28 angeordnet ist. Die Fahrerkabine 20 ist an ihrer Unterseite mit den Verankerungsteilen 28 der Tragbälge 26 verbunden, so dass eine gleichmäßige Abstützung der Fahrerkabine 20 am Fahrgestellrahmen 12 ermöglicht ist. Die vier Federbälge 26 ermöglichen durch individuelle Ansteuerung bzw. Druckbeaufschlagung eine horizontale Ausrichtung der Fahrerkabine 20 unabhängig von einer ggf. geneigten Ausrichtung des Fahrzeugrahmens 12. Gelenkverbindungen zwischen den Tragbälgen 26 und den Verankerungsteilen 28 sind an der Vorderseite der Fahrerkabine durch einen Stabilisator 30 verbunden. Auf diese Weise ist die jeweilige Neigung der Fahrerkabine 20 gegenüber dem Fahrgestellrahmen 12 exakt definiert.

Eine einfache Ausgestaltung der Erfindung kann vorsehen, dass die Fahrerkabine 20 in Fahrzeuglängsachse über die linken und die rechten Federbälge 26 und in Fahrzeugquerachse über eine Anhebung oder Absenkung des Chassis an der Hinterachse 18 in eine horizontale Lage gebracht werden kann. Zur Höhenverstellung der Hinterachse 18 eignet sich bspw. ein Luftfedersystem mit Federbälgen, ein sog. ECAS-System, bei dem die Federhöhe der Federbälge an der Hinterachse 18 variabel einstellbar ist.

In ähnlicher Weise können die Tragelemente 22 zur Schwingungsregelung der Fahrerkabine 20 eingesetzt werden. Derartige Nickschwingungen entstehen insbesondere beim stärkeren Beschleunigen und Verzögern des Fahrzeugs 10. Auch Wank- oder Rollbewegungen um die Fahrzeuglängsachse können durch eine gezielte Ansteuerung der einzelnen Dämpfungselemente der jeweiligen Tragbälge 22 zumindest teilweise unterdrückt werden. Ein hoher Kabinenschwerpunkt begünstigt derartige Relativbewegungen zwischen Fahrzeugrahmen und Fahrerkabine zusätzlich.

Nicht dargestellt sind in Figur 1 und 2 die Stoßdämpferelemente, die normalerweise den einzelnen Tragelementen zugeordnet sind und die jeweils für eine Schwingungsdämpfung der Fahrerkabine 20 sorgen. Wahlweise können diese Stoßdämpfer in ihrer Dämpfungscharakteristik verstellbar sein. Insbesondere während des Stillstandes des Fahrzeugs ist eine möglichst "harte" Dämpfungscharakteristik wünschenswert, um die Bewegungen der in horizontale Lage gebrachten Kabine möglichst stark zu dämpfen. Derartige Dämpferelemente sind als sog. CDC-Dämpfer bekannt.

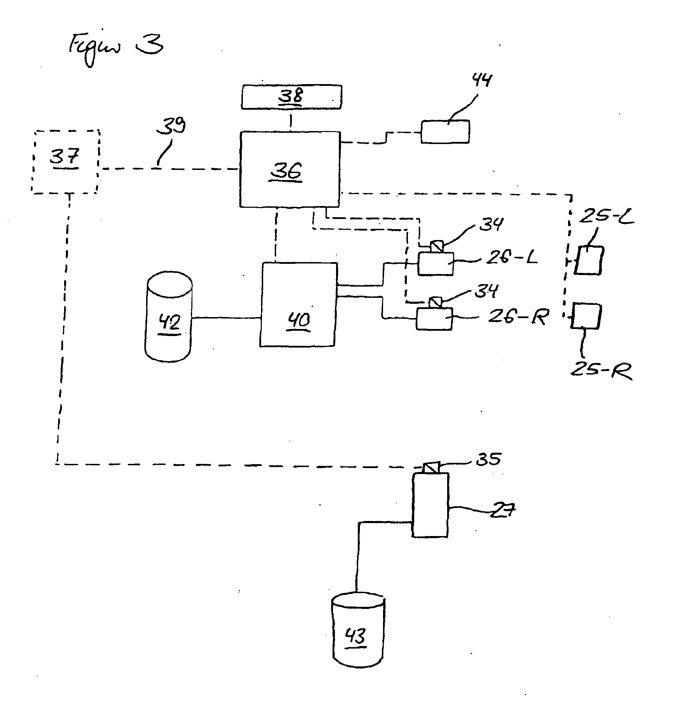

Die Figuren 3 bis 6 verdeutlichen in schematischen Blockschaltbildern verschiedene Varianten zur Steuerung einer Höhennivellierung bzw. zur Schwingungsdämpfung der Fahrerkabine 20.

Die Figur 3 verdeutlicht eine erste Variante einer Steuerschaltung zur horizontalen Ausrichtung der Fahrerkabine 20. Bei dieser einfachsten Variante werden die linken Tragbälge 26-L sowie die rechten Tragbälge 26-R zur Winkelausrichtung der Fahrerkabine 20 um die Fahrzeuglängsachse angesteuert. Die Winkelausrichtung der Fahrerkabine 20 um die Fahrzeugquerachse erfolgt mittels einer Druckbeaufschlagung von Tragelementen 27 eines an der Hinterachse 18 angeordneten ECAS-Systems. Jeder der Tragbälge 26-L und 26-R weist eine separate Steuereinheit 34 auf, mit der jeweils die Druckbeaufschlagung gesteuert wird. Die Steuereinheiten 34 der Tragbälge 26 sind über elektrische Steuerleitungen (unterbrochene Linien) mit einer zentralen Steuerschaltung 36 gekoppelt, die mit einer Eingabeeinrichtung 38 verbunden ist. Als Steuereinheiten 34 eignen sich bspw. bekannte Magnetventile, bei denen hydraulische oder pneumatische Ventile mittels einer elektromagnetischen Ansteuerung geschaltet werden.

Mittels der Eingabeeinrichtung 38 kann der Fahrer die gewünschten Steuerbefehle an die zentrale Steuerschaltung 36 übermitteln. Die zentrale Steuerschaltung 36 steuert weiterhin einen Ventilblock 40 an, der bspw. eine Reihe von Magnetventilen aufweisen kann. Mit Hilfe des steuerbaren Ventilblocks 40 können die Umströmvorgänge der Druckluft zwischen den Tragbälgen 26 und einer Druckluftversorgung 42 bzw. einem Luftvorrat variabel gesteuert werden. Die Leitungen zur Druckluftversorgung zwischen den Tragbälgen 26, dem Ventilblock 40 und der Druckluftversorgung 42 sind in durchgezogenen Linien ausgeführt.

Figur 3 zeigt weiterhin ein ECAS-Steuergerät 37, das zur Ansteuerung der Tragelemente 27 an der Hinterachse des Fahrzeugs über die Steuereinheit 35 dient. Das Anheben bzw. Absenken des Chassis kann mittels einer Druckbeaufschlagung bzw. -regulierung der Tragelemente 27 aus einem weiteren Druckluftvorrat 43 erfolgen. Das ECAS-Steuergerät 37 ist vorzugsweise über eine CAN-Bus-Verbindung 39 mit der zentralen Steuerschaltung 36 gekoppelt. Diese Verbindung ist jedoch nicht zwingend notwendig, da auch eine separate Ansteuerung der Tragbälge 26 und der Tragelemente 27 möglich ist. Ggf. kann auch das ECAS-Steuergerät 37 mittels der Eingabeeinrichtung 38 manuell angesteuert werden.

Dämpferelemente 25-L und 25-R sind jeweils den linken und rechten Tragbälgen 26-L bzw. 26-R zugeordnet. Diese Dämpferelemente 25-L, 25-R werden nach erfolgter Niveauregulierung der Kabine mittels geeigneter Steuersignale der zentralen Steuerschaltung 36 auf ihre härteste Dämpfungsstufe gestellt, so dass weitere Aufbaubewegungen der Kabine weitgehend unterdrückt werden können.

Bei Nutzfahrzeugen mit Blatt- oder Schraubenfederung an der Vorderachse und mit Luftfedern (ECAS-System) an der Hinterachse erfolgt die Höhenverstellung derart, dass das Chassis um die Querachse mittels der Hinterachsaufhängung in etwa horizontal ausgerichtet wird. Die horizontale Ausrichtung der Kabine erfolgt dann über die Tragelemente 26-L und 26-R. Bei Nutzfahrzeugen mit Luftfederung an allen Achsen kann das Chassis über das ECAS-System an der Vorder- und/oder Hinterachse angehoben bzw. abgesenkt werden.

Wenn bei den Erläuterungen der Figur 3 von rechten und linken Tragbälgen 26-L und 26-R sowie von rechten und linken Dämpfern 25-L und 25-R die Rede ist, so sind damit normalerweise vordere und hintere Elemente jeweils einer Seite (links oder rechts) gemeint, die in ihrer Ansteuerung jeweils miteinander gekoppelt sind.

In einer einfachen und kostengünstigen Variante kann der Fahrer die Ausrichtung der Fahrerkabine 20 manuell steuern, ohne dass irgendwelche weiteren Sensoren vorhanden sind. Ggf. kann ein optionaler Neigungssensor 44 eine automatische Ausrichtung ermöglichen, wenn der Fahrer hierzu mittels der Eingabeeinrichtung 38 einen entsprechenden Steuerbefehl gibt. Die Einbeziehung der Chassis-Höhenregulierung erfolgt vorzugsweise über entsprechende Steuerbefehle (bzw. CAN-Bus-Signale 39) von der zentralen Steuerschaltung 36 an das ECAS-Steuergerät 37.

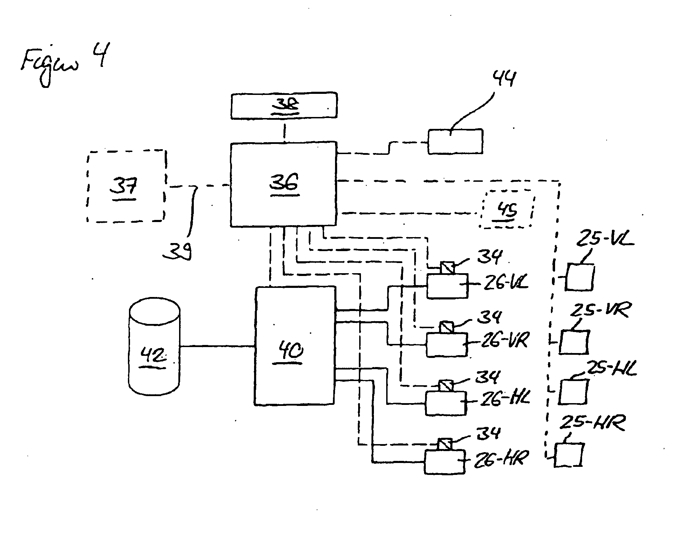

Eine zweite Variante der erfindungsgemäßen Aufhängungssteuerung ist anhand der Figur 4 verdeutlicht. Bei dieser Variante wird die Fahrerkabine 20 über alle vier Tragbälge 26 in ihrer Lage ausgerichtet. Es werden neben den beiden vorderen Tragbälgen 26-VL und 26-VR auch die beiden hinteren Tragbälge 26-HL und 26-HR von der zentralen Steuerschaltung 36 angesteuert. Aufgrund des komplexeren Zusammenwirkens der vier Tragbälge 26 kann die Lageausrichtung der Fahrerkabine 20 bei dieser Variante vorzugsweise mittels einer Auswertung der Signale des Neigungssensors 44 gesteuert werden. Alternativ hierzu kann die Steuerung auch manuell erfolgen. Zur Verbesserung der Wankstabilisierung kann das Fahrwerk mittels des ECAS-Systems auf den Achsanschlag abgesenkt werden. Dies kann ebenfalls über CAN-Bus-Signale 39 von der zentralen Steuerschaltung 36 an das ECAS-Steuergerät 37 erfolgen. Da die Einbeziehung des ECAS-Steuergeräts 37 sowie des CAN-Bus optional ist, sind diese Komponenten mit unterbrochener Linierung dargestellt.

Auch bei der Variante gemäß Figur 4 ist eine Verstellung von Dämpferelementen 25-VL, 25-VR, 25-HL, 25-HR auf ihre härteste Stufe nach der erfolgten Niveauregulierung mittels der Tragbälge 26 vorgesehen. Die Dämpferelemente 25 werden hierbei normalerweise gemeinsam mittels der zentralen Steuerschaltung 36 angesteuert. Hierzu kann eine gemeinsame Steuerleitung ausreichen, da eine separate Dämpferansteuerung während des Schlafmodus nicht sinnvoll ist. Wie zuvor erwähnt, ist das rechte vordere Dämpferelement 25-VR dem rechten vorderen Tragbalg 26-VR zugeordnet, das linke vordere Dämpferelement 25-VL dem linken vorderen Tragbalg 26-VL, etc, wobei die Tragbälge 26 jeweils in integrierter Bauausführung mit den Dämpfern 25 ausgebildet sein können.

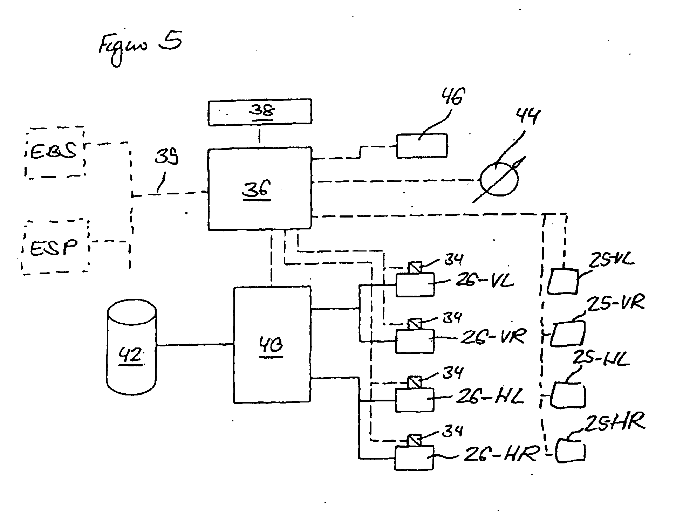

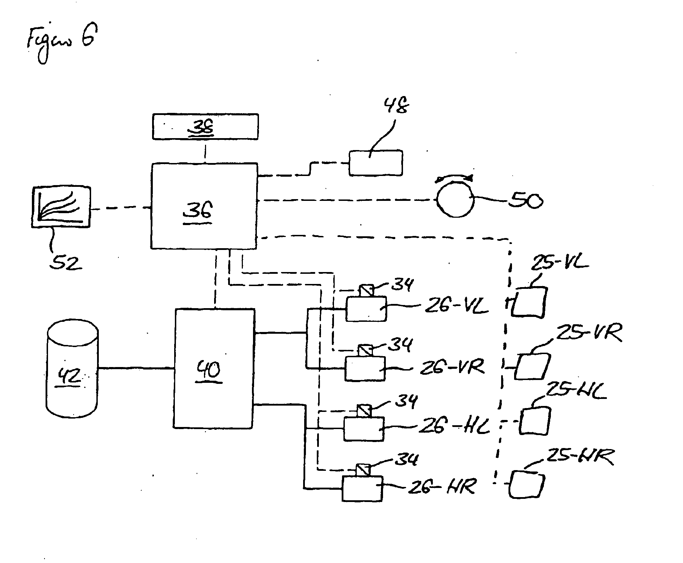

Ein mit unterbrochener Linierung angedeuteter zusätzlicher Sensor 45 ist optional und kann die Aufhängungssteuerung ggf. in die Lage versetzen, bei fahrendem Fahrzeug für eine Dämpfungsansteuerung zu sorgen. Diese Varianten werden anhand der folgenden Figuren 5 und 6 näher erläutert.

Der übrige Aufbau der Steuerung entspricht der bereits beschriebenen ersten Variante entsprechend Figur 3.

Bei den ersten beiden Varianten entsprechend der Figuren 3 und 4 ist vorgesehen sein, dass die Trag- bzw. Federbälge 26 und/oder die Tragbälge 32 der Hinterachse 18 nach dem Erreichen der gewünschten horizontalen Lage der Fahrerkabine 20 in ihre stärkste Dämpferstufe gebracht werden. Auf diese Weise kann verhindert werden, dass die Fahrerkabine bei äußeren Einflüssen durch Wind oder Erschütterungen oder bei Bewegungen eines Passagiers ins Schwanken geraten kann. Alternativ oder zusätzlich können zuschaltbare mechanische Verriegelungen der Fahrerkabine 20 vorgesehen sein.

Anhand der Figur 5 wird eine dritte Variante der Aufhängungssteuerung verdeutlicht, die im Unterschied zu den beiden ersten Varianten auch für eine Neigungskompensation der Fahrerkabine während der Fahrt des Fahrzeugs geeignet ist. Soll die erfindungsgemäße Aufhängungssteuerung gemäß Figur 5 auch zum Nick- oder Wankausgleich während der Fahrt des Nutzfahrzeuges genutzt werden, so kann es sinnvoll sein, zusätzlich die Signale eines Beschleunigungssensors 46 auszuwerten und in Abhängigkeit von den hierbei gelieferten Signalen eine unterschiedliche Ansteuerung der Dämpfungselemente 25 der Tragelemente vorzunehmen. Wenn im vorliegenden Zusammenhang der Einfachheit halber lediglich von einem Beschleunigungssensor 46 die Rede ist, so ist damit auch eine Sensorausstattung gemeint, die mehrere Beschleunigungssensoren, einen Gierratensensor und/oder einen Neigungssensor umfasst. Diese Sensoren können ggf. bereits Teil einer vorhandenen Fahrzeugausstattung sein, bspw. einer Fahrdynamikregelung. Die Sensorsignale können ggf. als Bussignale für eine zusätzliche Auswertung in der zentralen Steuerschaltung 36 zur Verfügung gestellt werden. So können über den CAN-Bus 39 wahlweise Geschwindigkeitssignale eines elektronischen Bremssystems (EBS) und/oder eines elektronischen Fahrstabilitätssystems (ESP) ausgewertet werden.

Der übrige Aufbau entspricht wiederum den zuvor beschriebenen Varianten. Selbstverständlich können alle erwähnten Varianten miteinander kombiniert werden, da die Höhenregulierung der Fahrerkabine 20 des stehenden Fahrzeugs und die Schwingungstilgung bei sich bewegendem Fahrzeug gleichermaßen über eine unterschiedliche Ansteuerung der Dämpfungselemente 25 der Tragelemente erfolgt.

Gegebenenfalls kann auf den Beschleunigungssensor 46 jedoch auch verzichtet werden, wodurch eine einfachere Steuerung realisiert werden kann. Diese vierte Variante der Aufhängungssteuerung wird anhand der Figur 6 illustriert. Hierbei kann es beispielsweise ausreichen, die Signale eines Geschwindigkeitssensors 48 und/oder eines Lenkwinkelsensors 50 auszuwerten, um Fahrzustandsänderungen zu erfassen, welche beispielsweise auf ein stärkeres Verzögern des Nutzfahrzeuges oder ein Beschleunigen hinweisen. Eine solche Steuerung kann mit wesentlich geringerem Rechenaufwand durchgeführt werden, wobei die hierbei erzielte Genauigkeit gegenüber einer aufwändigeren Regelung mittels Bescheunigungssensor 46 jedoch reduziert ist.

Die vom Geschwindigkeitssensor 48 gelieferten Signale können vorzugsweise über eine Zuordnungsvorschrift eines Kennfeldes 52 einer bestimmten Aufbaubewegung der Fahrerkabine 20 zugeordnet werden. Wenn die Fahrzeugbeschleunigung einen definierten Wert annimmt, so kann daraus auf eine definierte Nickschwingung der Kabine geschlossen werden. Gleiches gilt für unterschiedliche Fahrzeugverzögerungen. Das Kennfeld 52 sorgt für eine näherungsweise richtige Ansteuerung der Tragbälge, um diese Nickschwingungen zu unterdrücken.

In gleicher Weise können die vom Lenkwinkelsensor 50 gelieferten Signale über eine weitere Zuordnungsvorschrift des Kennfeldes 52 einer bestimmten Aufbaubewegung der Fahrerkabine 20 zugeordnet werden. Wenn die Querbeschleunigung einen definierten Wert annimmt, so kann daraus auf eine definierte Wankschwingung der Kabine geschlossen werden. Da diese Aufbaubewegungen nicht nur vom aktuellen Lenkwinkel, sondern auch von der aktuellen Fahrgeschwindigkeit abhängen, müssen die Signale des Geschwindigkeitssensors 48 zusätzlich ausgewertet werden. Das Kennfeld 52 sorgt für eine näherungsweise richtige Ansteuerung der Tragbälge, um die Wankschwingungen zu unterdrücken.

Für unterschiedliche Fahrzeuge sind jeweils unterschiedliche Kennfelder 52 notwendig, da die Fahrzeug- und Kabinenmassen sowie die jeweilige Kinematik starken Einfluss auf die geschwindigkeits- und lenkwinkelabhängigen Aufbaureaktionen haben.

Der Vorteil der anhand der Figur 6 beschriebenen vierten Variante der erfindungsgemäßen Aufbausteuerung liegt insbesondere in deren einfachem Aufbau. Die Ansteuerung der Dämpfer der Tragelemente 22 erfolgt hierbei mit einer relativ einfachen Steuerung, so dass keine aufwändige und rechenintensive Regelung notwendig ist. Besonders vorteilhaft lassen sich die Sensorsignale der beiden Sensoren 48 und 50 aus bereits vorhandenen Komponenten einer Fahrdynamikregelung (ESP) und/oder einer Blockierverhinderungseinrichtung (ABS) einer elektronisch geregelten Bremsanlage (EBS) gewinnen (vgl. Figur 5). Diese Signale stehen normalerweise als CAN-Bus-Signale zur Verfügung.

Gegebenenfalls kann das Ausgangssignal des Geschwindigkeitssensors 48 auch von einem Geber für eine Fahrgeschwindigkeitsanzeige und/oder für einen Fahrtenschreiber geliefert werden.

## Patentansprüche

1. Aufhängung für eine Fahrerkabine (20) eines Nutzfahrzeuges (10), mit wenigstens drei fluidisch wirkenden Tragelementen (22), die zwischen der Fahrerkabine (20) und einem Fahrgestellrahmen (12) angeordnet und die jeweils separat in ihrem Hub bzw. in ihrer Dämpfungscharakteristik einstellbar sind, wobei zumindest Nickbewegungen der Fahrerkabine (20) um eine Fahrzeugquerachse bzw. Roll- oder Wankbewegungen der Fahrerkabine (20) um eine Fahrzeuglängsachse aufgrund von Fahrzustandsänderungen mittels einer Verstellung einer Dämpfungscharakteristik wenigstens eines der Tragelemente (22) weitgehend ausgleichbar bzw. zumindest dämpfbar sind, wobei die Fahrzustandsänderungen des Nutzfahrzeuges (10) aus den Ausgangssignalen eines Fahrgeschwindigkeitssensors (48) sowie aus den Ausgangssignalen eines Lenkwinkelsensors (50) ableitbar sind, **dadurch gekennzeichnet, dass** die Ausgangssignale des Fahrgeschwindigkeitsensors (48) Signaldaten einer elektronischen Bremskraftregelung sind oder die Ausgangssignale des Lenkwinkelsensors (50) Signaldaten einer elektronischen Fahrdynamikregelung sind und/oder aus den Sensorsignalen für die Fahrgeschwindigkeit und für Lenkwinkeländerungen mittels einer Zuordnungsvorschrift eines jeweiligen Kennfeldes (52) Steuersignale für die Ansteuerung der Tragelemente (22) ableitbar sind.

2. Verfahren zur Ansteuerung einer Aufhängung für eine Fahrerkabine (20) eines Nutzfahrzeuges (10), die wenigstens drei fluidisch wirkende Tragelemente (22) umfasst, die zwischen der Fahrerkabine (20) und einem Fahrgestellrahmen (12) angeordnet und die jeweils separat in ihrem Hub bzw. in ihrer Feder- und/oder Dämpfungscharakteristik einstellbar sind, wobei zumindest Nickbewegungen der Fahrerkabine (20) um eine Fahrzeugquerachse bzw. Roll- oder Wankbewegungen der Fahrerkabine (20) um eine Fahrzeuglängsachse aufgrund von Fahrzustandsänderungen mittels einer Verstellung einer Federungs- und/oder Dämpfungscharakteristik wenigstens eines der Tragelemente (22) weitgehend ausgleichbar bzw. zumindest dämpfbar sind, wobei die Fahrzustandsänderungen des Nutzfahrzeuges (10) aus den Ausgangssignalen eines Fahrgeschwindigkeitssensors (48) sowie aus den Ausgangssignalen eines Lenkwinkelsensors (50) abgeleitet werden, **dadurch gekennzeichnet, dass** die Ausgangssignale des Fahrgeschwindigkeitsensors (48) aus den Signaldaten einer elektronischen Bremskraftregelung gewonnen werden oder die Ausgangssignale des Lenkwinkelsensors (50) aus den Signaldaten einer elektronischen Fahrdynamikregelung gewonnen werden und/oder aus den Sensorsignalen für die Fahrgeschwindigkeit und für Lenkwinkeländerungen mittels einer Zuordnungsvorschrift eines jeweiligen Kennfeldes (52) Steuersignale für die Druckbeaufschlagung der Tragelemente (22) abgeleitet werden.

## Claims

1. Suspension for a driver cab (20) of a utility vehicle (10), with at least three fluidically effective load-bearing elements (22), which load-bearing elements are arranged between the driver cab (20) and a chassis frame (12) and which elements can each be adjusted separately with regard to their lift and/or their shock-absorption characteristics, whereby at least any pitching movements of the driver cab (20) around a transverse vehicle axis and/or rolling or pitching movements of the driver cab (20) around a longitudinal vehicle axis due to changes in the driving state can be compensated to a large extent and/or can at least be absorbed using an adjustment of a shock-absorption characteristic of at least one of the load-bearing elements (22), wherein the changes in the driving state of the utility vehicle (10) can be derived from the output signals of a velocity sensor (48) and from the output signals of a steering angle sensor (50), **characterised in that** the output signals of the velocity sensor (48) are signal data of an electronic brake force regulator or the output signals of the steering angle sensor (50) are signal data of an electronic ride dynamics control and/or control signals for the triggering of the load-bearing elements (22) can be derived from the sensor signals for the velocity and for steering-angle changes using an allocation specification of a respective characteristic map (52).

2. Procedure for triggering a suspension for a driver cab (20) of a utility vehicle (10), which suspension includes at least three fluidically effective load-bearing elements (22), which load-bearing elements are arranged between the driver cab (20) and a chassis frame (12) and which elements can each be adjusted separately with regard to their lift and/or their suspension and/or shock-absorption characteristics, whereby at least any pitching movements of the driver cab (20) around a transverse vehicle axis and/or rolling or pitching movements of the driver cab (20) around a longitudinal vehicle axis due to changes in the driving state can be compensated to a large extent and/or can at least be absorbed using an adjustment of a spring suspension and/or shock-absorption characteristic of at least one of the load-bearing elements (22), wherein the changes in the driving state of the utility vehicle (10) are derived from the output signals of a velocity sensor (48) and from the output signals of a steering angle sensor (50), **characterised in that** the output signals of the velocity sensor (48) are gained from the signal data of an electronic brake force regulator or the output signals of the steering angle sensor (50) are gained from the signal data of an electronic ride dynamics control and/or control signals for the pressure application of the load-bearing elements (22) are derived from the sensor signals for the velocity and for steering-angle changes using an allocation specification of a respective characteristic map (52).

## Revendications

1. Suspension pour une cabine (20) d'un véhicule industriel (10), avec au moins trois éléments porteurs à effet fluidique (22) disposés entre la cabine (20) et un cadre de châssis (12) et réglables respectivement de manière séparée dans leur course et/ou dans leur caractéristique d'amortissement, au moins les mouvements de tangage de la cabine (20) autour d'un axe transversal de véhicule et/ou les mouvements de roulement ou de roulis de la cabine (20) autour d'un axe longitudinal de véhicule, dus à des changements de l'état de conduite, pouvant être en grande partie compensés ou au moins amortis au moyen d'un ajustage d'une caractéristique d'amortissement d'au moins un des éléments porteurs (22), les changements de l'état de conduite du véhicule industriel (10) pouvant être déduits des signaux de sortie d'un capteur de vitesse de marche (48) ainsi que des signaux de sortie d'un capteur d'angle de braquage (50), **caractérisée en ce que** les signaux de sortie du capteur de vitesse de marche (48) sont des données de signal d'une régulation électronique de la force de freinage ou les signaux de sortie du capteur d'angle de braquage (50) sont des données de signal d'une régulation électronique de la dynamique de marche et/ou des signaux de commande destinés au pilotage des éléments porteurs (22) peuvent être déduits des signaux de capteur pour la vitesse de marche et les changements d'angle de braquage au moyen d'une prescription d'affectation d'une cartographie respective (52).

2. Procédé pour piloter une suspension pour une cabine (20) d'un véhicule industriel (10) comprenant au moins trois éléments porteurs à effet fluidique (22) disposés entre la cabine (20) et un cadre de châssis (12) et réglables respectivement de manière séparée dans leur course et/ou dans leur caractéristique de suspension et/ou d'amortissement, au moins les mouvements de tangage de la cabine (20) autour d'un axe transversal de véhicule et/ou les mouvements de roulement ou de roulis de la cabine (20) autour d'un axe longitudinal de véhicule, dus à des changements de l'état de conduite, pouvant être en grande partie compensés ou au moins amortis au moyen d'un ajustage d'une caractéristique de suspension et/ou d'amortissement d'au moins un des éléments porteurs (22), les changements de l'état de conduite du véhicule industriel (10) étant déduits des signaux de sortie d'un capteur de vitesse de marche (48) ainsi que des signaux de sortie d'un capteur d'angle de braquage (50), **caractérisé en ce que** les signaux de sortie du capteur de vitesse de marche (48) sont obtenus à partir des données de signal d'une régulation électronique de la force de freinage ou les signaux de sortie du capteur d'angle de braquage (50) sont obtenus à partir des données de signal d'une régulation électronique de la dynamique de marche et/ou des signaux de commande destinés à l'alimentation en pression des éléments porteurs (22) sont déduits des signaux de capteur pour la vitesse de marche et les changements d'angle de braquage au moyen d'une prescription d'affectation d'une cartographie respective (52).
